# FASCICULE DE BREVET EUROPEEN

(11) **EP 1 325 772 B1**
(45) Date de publication et mention de la délivrance du brevet: **19.08.2009**
(21) Numéro de dépôt: 02292864.2
(22) Date de dépôt: 19.11.2002
(51) Int. Cl.: B01D 15/02

(54) **Dispositif d'injection d'un fluide dévié dans un procédé de séparation en lit mobile simulé**
Bypassflüssigkeitsinjektionssystem in einem simulierten Wanderbett-Trennungsverfahren
System for injecting a by-pass fluid in a simulated moving bed separation method

(30) Priorité: 19.12.2001 FR 0116444
(43) Date de publication de la demande: 09.07.2003
(73) Titulaire: Institut Français du Pétrole, 92852 Rueil-Malmaison Cedex (FR)
(72) Inventeur: Hotier, Gerard, 92500 Rueil Malmaison (FR)

(56) Documents cités:
- FR-A- 2 772 634
- FR-A- 2 794 663

## Description

La présente invention concerne un dispositif d'injection d'un courant de fluide utilisé comme fluide dévié dans un procédé de séparation mettant en oeuvre plusieurs lits d'adsorbants, un courant de fluide principal et plusieurs fluides secondaires, les lits étant séparés par au moins un plateau distributeur de fluide, le plateau pouvant comporter un ou plusieurs panneaux distributeurs mélangeurs extracteur ou DME permettant d'injecter et/ou de mélanger et/ou d'extraire un ou plusieurs fluides secondaires par l'intermédiaire d'une seule chambre de distribution.

L'invention s'applique notamment au dispositif et au procédé décrit dans la demande de brevet du demandeur FR 2772634, lorsque l'injection et l'extraction de fluides secondaires se fait au moyen d'un seul réseau de distribution, habituellement nommé " araignée " de distribution.

L'invention concerne aussi tous les procédés où l'on cherche à améliorer la pureté d'au moins un constituant dans un mélange circulant à travers un adsorbant solide ou un catalyseur solide.

Elle peut aussi s'appliquer dans les procédés de séparation d'au moins un constituant dans un mélange pour lequel on met en oeuvre toute séparation chromatographique d'adsorption ou d'échange d'ions par exemple.

Dans la suite de la description, on désigne par les expressions " fluide principal", un courant de fluide qui circule à travers les lits d'adsorbants, et par " fluide(s) secondaire(s) ", des fluides qui sont utilisés dans le procédé de séparation, par exemple le désorbant, la charge, l'extrait ou le raffinat et qui sont en relation avec l'extérieur.

L'invention s'applique en particulier à la séparation de n-paraffines ayant 10 à 13 atomes de carbone à partir de charges de type kérosène adouci.

L'art antérieur décrit différents dispositifs et procédés permettant d'effectuer la séparation de charges en lit mobile simulé. On peut citer les brevets US 2.985.589, US 3.214.247, US 3.268.605, US 3.592.612, US 4.614.204, US 4.378.292, US 5.200.075, US 5.316.821, et les demandes de brevets EP 0 769 316, FR 2772634 et WO 95 03867.

En règle générale, un lit mobile simulé comporte au moins trois zones chromatographiques, avantageusement quatre ou cinq, chacune de ces zones étant constituée par au moins un lit ou un tronçon de colonne.

Entre deux zones, il existe soit un point d'injection d'une charge à fractionner, soit un point d'injection d'un éluant ou désorbant, soit un point permettant de soutirer un extrait entre le point d'injection d'éluant et le point d'injection de la charge qui est situé en aval (en considérant le sens de circulation de l'éluant), soit un point de soutirage d'un raffinat entre chaque point d'injection du mélange et le point d'injection d'éluant qui est situé en aval lorsque l'on considère le sens de circulation de l'éluant.

L'ensemble des lits ou des tronçons de colonne forme une boucle fermée comprenant au moins une pompe régulée en débit permettant le recyclage du fluide principal, par exemple entre le premier et le dernier tronçon.

Au cours du procédé de séparation, on décale généralement dans un même sens, (aval ou amont, toujours en considérant le sens de circulation du fluide principal), les points d'injection et de soutirage d'au moins un tronçon ou colonne. C'est la base du principe d'un fonctionnement en lit mobile simulé.

Au cours de ce procédé, il est important que la distribution du fluide sur chacun des lits d'adsorbants se fasse de manière la plus uniforme et la plus homogène possible.

La distribution sur chacun des lits requiert une collecte du flux provenant du lit précédent (fluide principal circulant selon l'axe principal de la colonne), la possibilité d'y injecter un fluide annexe ou fluide secondaire tout en mélangeant le mieux possible ces deux fluides, ou encore la possibilité de prélever une partie du fluide collecté, de l'extraire pour l'envoyer vers l'extérieur du dispositif et aussi de redistribuer un fluide sur le lit suivant.

Pour ce faire, on peut soit faire transiter l'intégralité du fluide ou flux principal dans l'adsorbeur selon un schéma décrit dans le brevet US 2.985.589, soit faire ressortir une grande partie ou la totalité de ce flux vers l'extérieur selon un procédé décrit dans le brevet US 5.200.075.

Une autre solution consiste, comme il est décrit dans la demande de brevet FR 2772634, à faire transiter une majorité du flux principal vers l'intérieur et une minorité de ce flux vers l'extérieur, typiquement de 2 à 20 % du flux. Un des avantages d'un tel système est que les circuits d'injection et de prélèvement des fluides secondaires ont, en permanence sensiblement la même composition. Deux plateaux distributeurs sont reliés par un circuit extérieur connu sous le nom de circuit de dérivation synchrone. Ce circuit a notamment pour fonction de faire circuler la minorité de flux prélevé assurant une composition identique. Sur le circuit de dérivation, sont connectés les vannes tout ou rien de prélèvement des fluides secondaires et un clapet anti-retour. Optionnellement, le circuit peut être équipé d'une vanne tout ou rien ou encore d'une vanne de contrôle permettant d'effectuer les injections et les soutirages sur un seul plateau.

Un rinçage continu des araignées de distribution des plateaux distributeurs des unités de séparation en lit mobile simulé peut être réalisé de deux façons :
1) lorsque chacun des plateaux est équipé d'au moins deux réseaux indépendants de distribution (D₁ et D₂), on met par exemple en communication le réseau D₁ du plateau P avec le réseau D2 du plateau P+1, et le réseau D₁ du plateau P+1 avec le réseau D₂ du plateau P+2, de sorte que sur chacun des plateaux distributeurs tous les réseaux de distribution voient en permanence une circulation de fluide, et que chacun des plateaux voit s'écouler un débit de fluide dévié d'un réseau de distribution vers le fluide principal et un second débit de fluide dévié sensiblement égal depuis le fluide principal vers le second réseau de distribution. La force motrice de ces écoulements est assurée par la perte de charge provoquée par l'écoulement du fluide principal dans le milieu granulaire poreux localisé entre deux plateaux distributeurs successifs.
2) lorsque chacun des plateaux distributeurs n'est équipé que d'un seul réseau de distribution, les circuits de dérivation ne peuvent s'établir qu'un lit sur deux, par exemple du plateau P au plateau P+1, puis du plateau P+2 au plateau P+3. En effet, si une ligne de dérivation reliait les plateaux P+1 et P+2, il en résulterait une circulation parallèle à l'adsorbeur depuis le lit de tête jusqu'au lit de fond. L'inconvénient de n'établir un circuit de dérivation qu'un lit sur deux est que les débits internes varieraient d'un lit à l'autre : sur les lits comportant un circuit de dérivation il en résulterait un débit D tandis que sur les lits ne comportant pas de circuit de dérivation il en résulterait un débit D + b.

Un autre brevet FR-A-2794663 décrit un dispositif d'injection d'un fluide dévié provenant d'une chambre de distribution, de mélange et/ou d'extraction d'un plateau amont dans une région Ri d'un lit d'adsorbant en aval de ce plateau.

La présente invention concerne un dispositif et un procédé particulièrement bien adaptés pour des dispositifs de séparation où les plateaux sont équipés d'un seul réseau de distribution des fluides secondaires, les panneaux distributeurs-mélangeurs-extracteurs ou DME comportant une seule chambre de distribution, extraction, et/ou mélange.

L'exigence de qualité des utilisateurs ayant évolué, le standard de pureté à atteindre est passé des valeurs données dans la fourchette (98.1 ; 99%) à la valeur de 99,5% pour les n-paraffines de C10 à C13. Les exploitants doivent en conséquence apporter aux unités de séparation existantes les modifications permettant d'atteindre ces nouveaux objectifs.

L'invention peut ainsi s'appliquer à des unités existantes et à des unités neuves. Elle est utilisée notamment dans les procédés et les dispositifs de séparation par adsorption dans des lits mobiles simulés à contre-courant et éventuellement dans les installations comportant une vanne tournante. Elle trouve son application par exemple dans un dispositif comportant une distribution centrale décrite par exemple dans le brevet US 4.378.292 où les plateaux distributeurs ne sont équipés que d'une seule araignée de distribution, lors d'un revamping de l'unité ou encore lors d'un changement significatif de composition de la charge qui conduit à un changement de configuration de l'unité. L'invention s'applique aussi lors du dégoulottage d'une unité.

De façon plus générale, la modification apportée par le schéma de l'invention s'applique particulièrement bien dans le cas d'opérations de dégoulottage d'une unité pour le remplacement du tamis moléculaire et/ou pour renforcer mécaniquement les plateaux distributeurs. Lorsque ce type de modification est requis, il s'accompagne d'un changement de la vanne rotative existante ; un changement de configuration nécessite de remplacer le rotor de la vanne, une augmentation de capacité de doubler la vanne rotative en plaçant une deuxième vanne en parallèle. Ces transformations se révèlent être très onéreuses et peuvent avantageusement être remplacées par la suppression de la vanne rotative et son replacement par 96 ou 120 vannes tout ou rien dont le coût total est environ deux fois plus faible.

Par ailleurs, certaines séparations peuvent être réalisées dans des colonnes chromatographiques de diamètre suffisamment petit pour ne pas nécessiter de mat central de supportage des plateaux distributeurs. La réinjection de fluide dévié pour rincer les lignes de distribution, dans une zone particulière du lit d'adsorbant, selon le brevet FR2794663 peut présenter l'inconvénient d'un choc thermique lorsque la circulation momentanément interrompue dudit fluide dévié reprend. Un tel choc thermique sur l'adsorbant minéral peut causer la formation de fines entraînant des baisses de performances notables.

Un objet de la présente invention est de préciser où aller injecter le fluide dévié pour supprimer cet inconvénient, dans des colonnes de faible diamètre.

L'invention concerne un dispositif permettant de séparer au moins un composé à partir d'un mélange ou d'un corps par adsorption, en lit mobile simulé comportant :
* au moins une enceinte ou colonne, comportant un ou plusieurs lits d'adsorbants (Ai), deux lits d'adsorbants étant séparés par au moins un plateau (Pi) de distribution et d'extraction de fluides, le plateau comportant un ou plusieurs panneaux permettant de distribuer, mélanger et/ou extraire des fluides,
* au moins un conduit d'introduction d'un fluide principal et au moins un conduit d'extraction du fluide principal,
* plusieurs conduits permettant d'extraire ou d'injecter des fluides secondaires,
* un circuit de dérivation mettant en communication un plateau de distribution avec au moins une ligne (Li,j ) de dérivation,
* le panneau comporte une seule chambre (Ci) de distribution et /ou d'extraction, et une chambre de mélange, soit identique (Ci), soit distincte et contigue à ladite chambre (Ci).

Il est caractérisé en ce que :
- le dispositif comporte des moyens (14, Voi,j, 20) de mise en communication d'au moins une chambre (Ci) avec au moins une ligne (Li,j) de dérivation,
- une des extrémités de la ligne de dérivation est en liaison avec ladite chambre Ci d'un panneau du plateau Pi, et l'autre extrêmité est reliée à une région (Ri + 1) d'un panneau du plateau de distribution Pi + 1, ladite région étant distincte de la chambre de distribution Ci + 1.

Les moyens de mise en communication comportent, par exemple, au moins une vanne Voi,j disposée sur au moins une ligne (Li,j) de dérivation, et l'extrémité de la ligne de dérivation qui n'est pas liée à la région du plateau peut être reliée à une ligne (Ti) d'introduction et/ou d'extraction.

Les moyens de mise en communication comportent par exemple au moins une vanne rotative, ladite vanne rotative étant reliée à au moins une ligne (Ti) d'introduction et/ou d'extraction et au moins à une ligne (Li,j) de dérivation, ladite vanne comportant des moyens permettant au moins de faire communiquer une ligne d'introduction et/ou d'extraction à au moins une ligne de dérivation.

La vanne rotative dont un exemple de réalisation est décrit dans le brevet FR 2794663 de la demanderesse permet par exemple de mettre en communication plusieurs groupes de conduits, groupe G₁, groupe G₂ et groupe G₃, ladite vanne comportant
- un stator pourvu de plusieurs moyens de circulation (E, F, R, S, D) du ou des fluides du groupe G₁, des moyens de passage d'au moins deux fluides F₁, F₂ appartenant au groupe G₃,
- un rotor équipé de moyens de passage des fluides du groupe G₃ et aussi des moyens permettant la mise en communication soit des fluides de groupe G₁ avec le groupe G₃, ou bien du groupe G₃ avec le groupe G₃,
- le nombre des moyens de passage pour le fluide F₁ est sensiblement identique au nombre des moyens de passage pour le fluide F2, ladite vanne comporte des moyens de mise en communication d'au moins deux fluides du groupe G₃ et en ce que la section S₁ de passage des lumières pour le fluide F₁ est différente de la section de passage S₂ des lumières destinées au fluide F₂.

Les moyens de passage de la vanne pour le fluide F₁ et pour le fluide F₂ présentent par exemple des surfaces de passage respectivement S₁ et S₂ et le rapport S₁/S₂ est environ égal à 4 et, de préférence, compris entre 2 et 10.

Les moyens de mise en communication des fluides de groupe G₃ peuvent être constitués d'encoches disposées dans une couche de matériau ou liner déposée sur la face inférieure du rotor.

Une encoche a, par exemple, une profondeur " pe " et la valeur de la profondeur est au moins égale à l'épaisseur " e " du liner.

Les moyens de circulation (E, R, S, D, F) disposés au niveau de la vanne, sont par exemple formés de plusieurs rainures disposées sur la face d'appui, ou face supérieure du stator et en ce que les encoches sont disposées dans le liner.

Le nombre de ces moyens de circulation est par exemple égal à 5.

Le circuit de distribution des fluides est par exemple disposé autour de ladite enceinte, et il peut comporter une ligne principale qui se divise en plusieurs lignes secondaires de façon que le ou les fluides atteignent les panneaux formant un plateau sensiblement au même instant.

Les panneaux peuvent avoir une découpe de type parallèle et le dispositif de distribution de fluide comporter un conduit principal, la ligne de dérivation est par exemple en liaison avec une région du panneau.

Un plateau est par exemple délimité par une grille inférieure et une grille supérieure et selon une variante, l'extrémité de la ligne de dérivation en liaison avec la chambre de distribution d'un plateau Pi est reliée à un moyen de distribution disposé en-dessous de ladite grille supérieure dans unespace de collecte d'un plateau aval Pi + 1.

Selon une autre variante, l'extrêmité de la ligne de dérivation en liaison avec la chambre de distribution d'un plateau Pi peut être reliée à un moyen de distribution disposé en-dessous de la grille supérieure dans une chambre de mélange contiguë à la chambre de distribution du plateau Pi + 1.

L'invention concerne aussi un procédé d'injection d'un fluide dévié dans un procédé de séparation de constituants d'une charge par lit mobile simulé comportant au moins les étapes suivantes :
* on fait circuler un fluide principal à travers plusieurs lits d'adsorbants, disposés entre des plateaux de distribution,
* on injecte et on extrait des fluides secondaires (charge, désorbant, ..) selon une séquence appropriée pour réaliser la séparation des constituants à séparer de la charge,
* on injecte un fluide dévié d'un plateau Pi vers le suivant (Pi + 1).

Il est caractérisé en ce que l'on fait circuler au moins une partie du fluide principal à l'extérieur de l'enceinte permettant de réaliser la séparation par l'intermédiaire d'une ligne de dérivation comportant au moins deux extrémités, une des extrémités étant en liaison avec une chambre Ci de distribution et l'autre extrêmité étant en liaison avec une région d'un plateau suivant Pi + 1 distincte d'une région (Ri + 1) dudit plateau Pi + 1, cette région étant distincte de Ci + 1.

On prélève par exemple à partir d'une chambre (Ci) correspondant à un plateau Pi une fraction du fluide principal et on injecte la fraction du fluide principal dans une chambre de mélange contiguë à une chambre de distribution Ci + 1 du plateau suivant Pi + 1.

On peut injecter le fluide dévié selon l'invention pendant toute la durée de la période du cycle. Le débit de fluide dévié est inférieur à 5% par exemple à celui qui traverse le lit localisé entre Pi et Pi + 1.

Le dispositif et le procédé s'appliquent par exemple à la séparation des normales paraffines de 10 à 13 atomes de carbone à partir de charges de type kérosène adouci.

L'invention sera mieux comprise au vu des figures suivantes illustrant de manière simplifiée et non limitative plusieurs modes de réalisation du dispositif et du procédé associé, parmi lesquelles :
- la figure 1 représente une disposition des lignes de dérivation par rapport à une colonne de séparation,
- la figure 2 représente un mode de réalisation utilisant des vannes de type " rotatives ",
- les figures 3A 3B 3C donnent des exemples de dispositifs d'injection du fluide dévié disposé dans le plateau distributeur, par exemple dans une zone de collecte (fig 3B) ou dans une zone de mélange (fig 3C)
- la figure 4 représente un exemple de liaison de deux plateaux successifs avec une orientation des panneaux perpendiculaire d'un étage au suivant,
- la figure 5 montre une vue de dessus d'un système de distribution disposé autour d'une colonne de séparation,

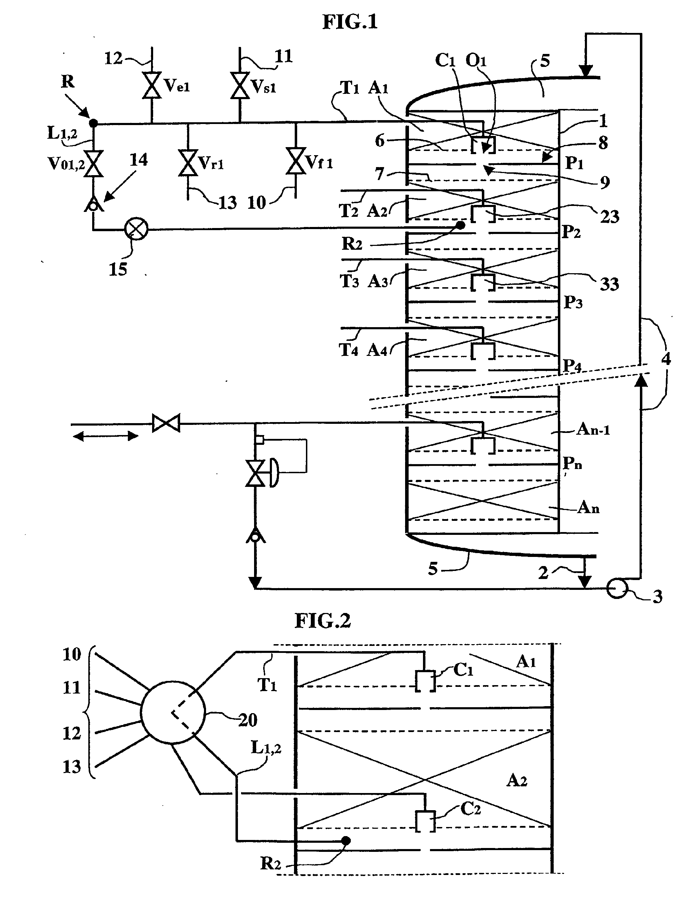

Sur la figure 1, on a représenté une colonne de séparation par chromatographie en lit mobile simulé équipée de plusieurs lignes Li,j de dérivation.

La colonne comporte une enceinte 1, par exemple sensiblement cylindrique, qui est remplie d'un adsorbant réparti en plusieurs lits A₁ à Aₙ, au moins un plateau Pi distributeur de fluides étant disposé entre deux lits d'adsorbant. Un plateau Pi comporte un ou plusieurs panneaux ou DME ayant pour fonction de distribuer, extraire et/ou mélanger un ou plusieurs fluides, chaque panneau comportant une chambre Ci de distribution-extraction-mélange qui est reliée avec l'extérieur via une araignée de distribution de fluides.

Le plateau Pi comporte notamment une grille supérieure 6 de maintien du lit d'adsorbant, une chambre Ci de distribution, extraction et/ou mélange par panneau, une grille inférieure 7, des moyens tel une chicane 8 (baffle en anglais) permettant de séparer la grille inférieure 7 de la grille supérieure 6. Le baffle 8 est pourvu d'une ouverture centrale 9 permettant la circulation des fluides. La chambre Ci comporte par exemple dans sa partie inférieure un ou plusieurs orifices Oi. Ces orifices Oi laissent passer le fluide secondaire. Ce dernier est soit introduit dans le lit suivant après avoir été mélangé au fluide principal ayant traversé le lit principal, soit soutiré par la ligne de transfert appropriée.

Différentes configurations peuvent être envisagées pour les panneaux ou DME, notamment les géométries décrites dans le brevet US 5.792.346 du demandeur, pour lesquelles le panneau comporte une seule chambre de distribution, extraction et/ou mélange d'un ou plusieurs fluides.

Le fluide principal circule selon l'axe longitudinal ou axe principal de la colonne. Il est extrait par un conduit 2, recyclé par l'intermédiaire d'une pompe 3 et un conduit 4 en tête de colonne. La colonne peut être disposée selon un axe sensiblement vertical ou encore sensiblement horizontal. Le fluide principal s'écoule à l'intérieur de la colonne selon un écoulement de type piston ou plug flow, la composition et le front d'écoulement étant sensiblement uniformes en tous points de la section de la colonne. Un dispositif de distribution des fluides (non représenté sur la figure) en liaison avec le conduit 4 peut éventuellement équiper la tête de la colonne.

Une chambre Ci de distribution, extraction et/ou mélange est reliée avec l'extérieur de la colonne par l'intermédiaire d'un circuit comportant un conduit Ti relié à plusieurs lignes de transfert de fluides secondaires. Ces lignes comportent par exemple, une ligne 10 d'injection de la charge, une ligne 11 d'injection du désorbant, une ligne 12 de soutirage d'un extrait et une ligne 13 de soutirage d'un raffinat. Chaque ligne de transfert est équipée de vannes Vfi, Vei, Vsi et Vri où l'indice i correspond au plateau Pi et où f désigne la charge, e l'extrait, s le désorbant et r le raffinat. L'ensemble de ces vannes est relié à des moyens de permutation séquentielle adaptés à faire avancer périodiquement chaque point d'injection du fluide secondaire ou de soutirage du fluide secondaire d'un lit dans le sens de la circulation du fluide principal, c'est-à-dire du haut vers le bas, de façon à obtenir un fonctionnement en contre courant mobile simulé. Au contraire si l'on souhaite un fonctionnement en cocourant simulé, on permutera les ouvertures de vanne vers le haut dans le sens inverse de la circulation du fluide.

Le principe de fonctionnement de ces lignes est par exemple donné dans la demande de brevet FR 2772634 dont les grandes lignes seront rappelées dans la présente demande. Une ligne de dérivation Li,j est pourvue d'au moins un des dispositifs mentionnés ci-après pris seul ou en combinaison, à savoir un clapet anti-retour 14, un débitmètre 15, une vanne Voi,j de contrôle, asservie ou non au débitmètre. Une pompe éventuellement disposée sur la ligne de dérivation peut éventuellement suppléer une insuffisance de perte de charge.

La vanne équipant le circuit de dérivation a pour référence Voi,j où l'indice o correspond à la fonction de dérivation et les indices i,j aux plateaux entre lesquels circule le fluide dévié.

Les mots " amont " et " aval " sont définis en relation avec le sens d'écoulement du fluide principal dans la colonne.

Dans le mode de réalisation donnée au niveau de la partie supérieure de la figure 1, une première extrémité de la ligne L_{1,2} réalisant la dérivation du fluide entre le plateau P₁ et le plateau P₂ est reliée par un point de connexion R à la ligne T₁ d'introduction et/ou d'extraction de fluides qui communique avec la chambre C₁ et la seconde extrémité de la ligne L_{1,2} est connectée par des moyens appropriés, dont certains exemples de réalisation sont détaillés ci-après, à une région référencée R2 du plateau suivant P₂. Une telle disposition permet de prélever une fraction du fluide principal de la chambre C1 à partir du lit A1 du plateau P₁, de l'extraire par le conduit T₁ et de le réinjecter dans le plateau P2 via la ligne de dérivation L_{1,2} au niveau de la région référencée R₂. La fraction prélevée a pour fonction de balayer la ligne de dérivation et l'araignée de distribution du plateau du lit localisé A₁ immédiatement en aval.

Un cycle de séquence du procédé de séparation mis en oeuvre selon la première variante de réalisation peut comporter par exemple les étapes suivantes :
1) injection de la charge au niveau de la chambre Ci,
2) dévier le fluide entre la chambre Ci d'un plateau Pi et la région du plateau suivant Pi+1, entre Ci et Ri+1 pour simplifier la description,
3) injection de diluant inerte au niveau de la chambre Ci,
4) dévier le fluide entre Ci et Ri + 1,
5) soutirage de l'extrait à partir de la chambre Ci,
6) dévier le fluide entre Ci et Ri+1,
7) injection du désorbant au niveau de la chambre Ci,
8) dévier le fluide entre Ci et Ri+1,
9) soutirage du raffinat à partir de la chambre Ci,
10) dévier le fluide entre Ci et Ri+1.

Il est bien entendu que, sans sortir du cadre de l'invention, le cycle décrit ci-dessus peut commencer à une étape différente de celle de l'injection de la charge.

La figure 2 schématise une autre variante de réalisation différant de la figure 1 par le circuit d'introduction et d'extraction des fluides secondaires.

Pour ce mode de réalisation, le circuit comporte une vanne rotative 20 qui a pour fonction de mettre en communication les différentes chambres Ci de distribution, extraction et soutirage avec des sources de fluide ou des conduits situés à l'extérieur de la colonne et aussi de réaliser la fonction de déviation du fluide.

Quatre lignes de transfert (10, 11, 12, 13) des fluides secondaires et identiques à celles données à la figure 1 sont reliées à la vanne rotative 20.

Au niveau de la vanne 20, on trouve plusieurs lignes de transfert Ti en liaison avec une chambre Ci d'un plateau Pi et plusieurs lignes de dérivation Li,j communiquant avec une région d'un plateau suivant Pi + 1.

La vanne rotative 20 est pourvue de moyens internes qui permettent de faire communiquer :
- soit les lignes de transfert 10, 11, 12, 13 des fluides secondaires avec les lignes de transfert Ti,
- soit d'une zone Ri + 1 d'un plateau Pi + 1 avec une chambre Ci d'injection d'extraction, mélange d'un plateau Pi pour réaliser la fonction de déviation du fluide,
- soit éventuellement les lignes de transfert 10, 11, 12, 13 avec les lignes Li,j de dérivation et les lignes de transfert Ti pour réaliser la fonction de déviation ou de dérivation du fluide, et simultanément l'injection ou l'extraction.

Par exemple sur la figure 2, pour réaliser la fonction de déviation ou de dérivation du fluide, le fluide prélevé à partir de la chambre C₁, du plateau P1 circule dans la ligne T₁ puis à l'aide de moyens appropriés situés dans la vanne et décrits plus loin, est envoyé dans la ligne de dérivation L_{1,2} au niveau de la région R₂ disposée dans le plateau P2 relatif au lit d'adsorbant A₂.

Le principe de fonctionnement du procédé de séparation est identique à celui qui a été donné dans l'exemple de la figure 1.

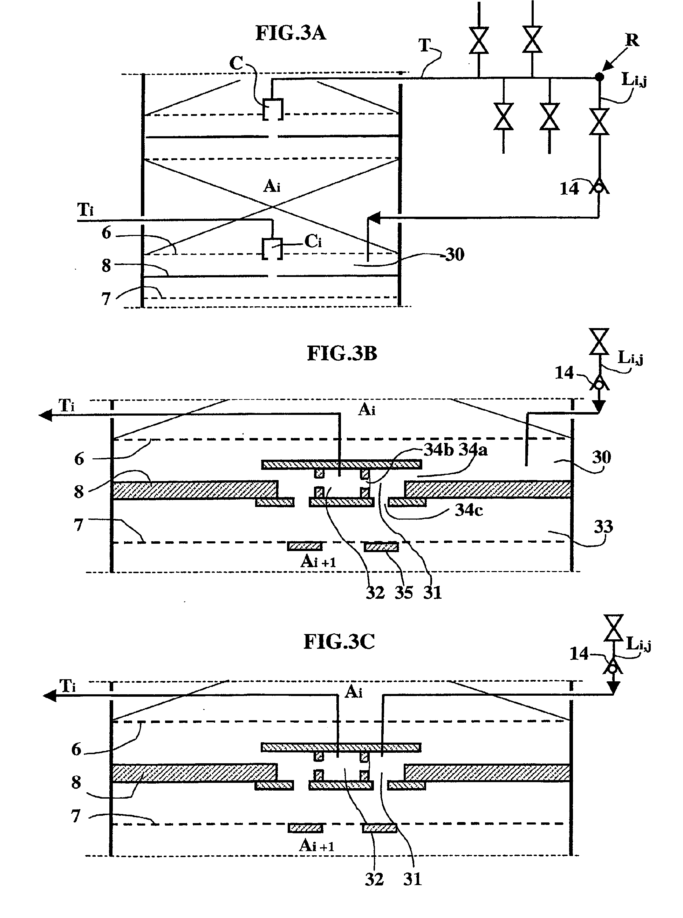

Quant à l'extrémité de la ligne de dérivation Li,j pour réinjecter une fraction du fluide principal qui est reliée à une zone du plateau distributeur, les moyens de réinjection peuvent être formés par une ligne, disposée simplement en-dessous de la grille supérieure 6 d'un plateau, dans une zone de collecte 30 du fluide principal (fig 3A, 3B) au-dessus du baffle 8 ou dans une zone 31 de mélange du fluide principal et des fluides secondaires (fig 3C) contiguë à la chambre de distribution 32 permettant ainsi le passage de la fraction du fluide principal prélevé de la chambre Ci du plateau Pi, dans la région 30, 31 du plateau Pi + 1 (figures 3A, 3B, 3C). La chambre de mélange 31 selon la figure 3B comprend au moins trois orifices : le fluide dévié injecté dans le volume entre la grille supérieure 6 et le baffle 8 pénètre dans la chambre de mélange par l'orifice 34a. Une mineure partie du fluide s'écoule dans la chambre de distribution 32 par l'orifice 34b et la majeure partie du fluide s'écoule vers la grille inférieure par l'orifice inférieur 34c. Un brise jet 35 sous l'orifice 34c disperse le fluide recueilli. La région de réinjection 33 peut aussi, selon une variante, se trouver sous le baffle 8 au-dessus de la grille inférieure7.

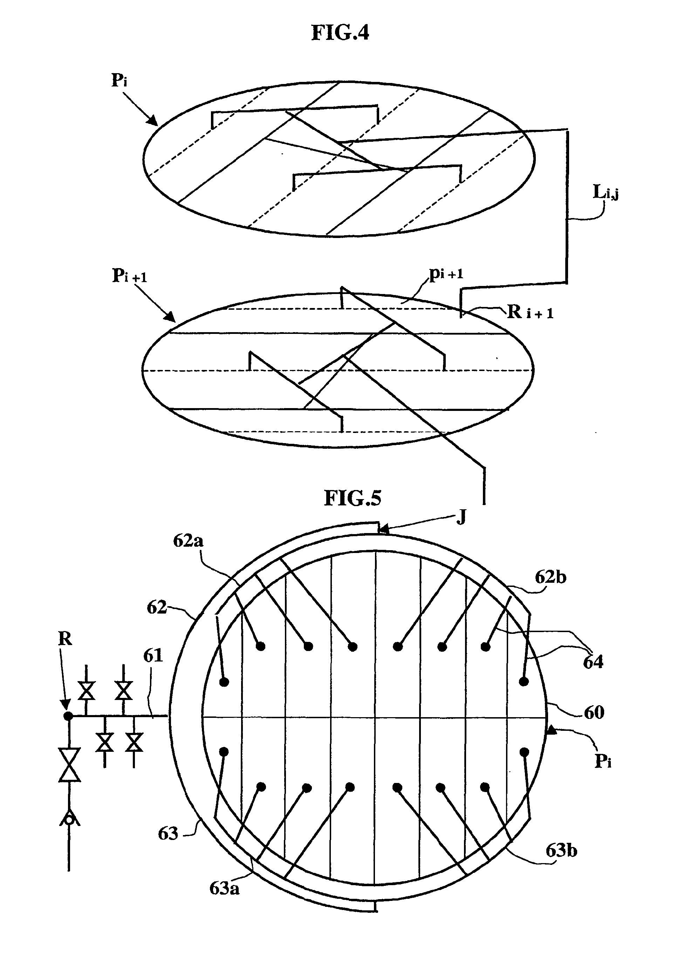

La figure 4 donne un exemple de liaison de deux plateaux successifs montrant le point de réinjection de la ligne Lij dans une région Ri + 1 de l'espace de collecte de l'un des 4 panneaux pi + 1 du plateau distributeur. Dans cet exemple non limitatif l'orientation des panneaux pi et pi + 1 est perpendiculaire d'un étage au suivant, tandis que les lignes de réinjection peuvent former un angle de 120° d'un étage au suivant.

La figure 5 est une vue de dessus d'un système de distribution disposé à la périphérie d'une colonne de séparation 60. La colonne comporte plusieurs plateaux Pi répartis de façon sensiblement similaire à celle décrite aux figures précédentes. Chaque plateau Pi est formé de plusieurs panneaux comportant chacun une seule chambre Ci de distribution-extraction-mélange. Un plateau Pi peut être découpé en plusieurs secteurs, par exemple 4 secteurs dans cet exemple de réalisation. Chaque chambre Ci est reliée au système de distribution et d'extraction de fluides par l'intermédiaire de lignes de transferts 61 agencées par exemple de la manière donnée ci-après.

Le système de distribution comporte une ligne de transfert 61 se subdivisant en deux conduits 62, 63. Les conduits 62 et 63 se subdivisent eux-mêmes en deux sous conduits 62a, 62b et 63a, 63b permettant de distribuer et/ou extraire des fluides vers ou à partir des quatre secteurs du plateau.

L'extrémité d'un sous-conduit 62a, 62b, 63a, 63b distincte du point de jonction J comporte dans une zone donnée, un ou plusieurs conduits 64 dont le nombre est égal au nombre de panneaux formant un secteur. Les fluides atteignent ainsi les panneaux formant un plateau sensiblement au même instant.

## Revendications

1. Dispositif permettant de séparer au moins un composé à partir d'un mélange ou d'un corps par adsorption, en lit mobile simulé comportant :
• au moins une enceinte ou colonne, comportant un ou plusieurs lits d'adsorbants (Ai), deux lits d'adsorbants étant séparés par au moins un plateau (Pi) de distribution et d'extraction de fluides, le plateau comportant un ou plusieurs panneaux de distribution permettant de distribuer, mélanger et/ou extraire des fluides,
• au moins un conduit (4) d'introduction d'un fluide principal et un conduit (2) d'extraction du fluide principal,
• plusieurs conduits (10, 11, 12, 13, Ti) permettant d'extraire ou d'injecter des fluides secondaires,
• un circuit de dérivation mettant en communication un plateau de distribution avec au moins une ligne (Li,j) de dérivation,
• le panneau comporte une seule chambre (Ci) de distribution et/ou d'extraction, et une chambre de mélange, soit identique (Ci), soit distincte et contigùe à ladite chambre (Ci),
**caractérisé en ce que** :
• le dispositif comporte des moyens (14, Voi,j, 20) de mise en communication d'au moins une chambre (Ci) avec au moins une ligne (Li,j) de dérivation,
• une des extrémités de la ligne de dérivation est en liaison avec ladite chambre Ci d'un panneau du plateau Pi, et l'autre extrémité est reliée à une région (Ri + 1) d'un panneau du plateau de distribution Pi + 1, ladite région étant distincte de la chambre de distribution Ci + 1.

2. Dispositif selon la revendication 1 **caractérisé en ce que** lesdits moyens de mise en communication comportent au moins une vanne Voi,j disposée sur au moins une ligne (Li,j) de dérivation et **en ce que** l'extrémité de la ligne de dérivation qui n'est pas reliée à la région du plateau est reliée à une ligne (Ti) d'introduction et/ou d'extraction.

3. Dispositif selon la revendication 1 **caractérisé en ce que** lesdits moyens de mise en communication comportent au moins une vanne rotative (20), ladite vanne rotative étant reliée à au moins une ligne (Ti) d'introduction et/ou d'extraction et au moins à une ligne (Li,j) de dérivation, ladite vanne comportant des moyens permettant au moins de faire communiquer une ligne d'introduction et/ou d'extraction à au moins une ligne de dérivation.

4. Dispositif selon l'une des revendications 1 à 3 **caractérisé en ce que** le circuit de distribution des fluides est disposé autour de ladite enceinte, et **en ce qu'**il comporte une ligne principale (61) qui se divise en plusieurs lignes secondaires (62, 63, 62a, 62b,) afin que le ou les fluides atteignent les panneaux formant un plateau sensiblement au même instant.

5. Dispositif selon l'une des revendications 1 à 4 **caractérisé en ce que** les plateaux ont une découpe de type parallèle, **en ce que** le dispositif de distribution de fluide comporte un conduit principal, connecté à des conduits secondaires relatifs à chacun des panneaux du plateau et **en ce que** la ligne de dérivation est en liaison avec une région d'un panneau.

6. Dispositif selon l'une des revendications 1 à 5 **caractérisé en ce qu'**un plateau est délimité par une grille inférieure (7) et une grille supérieure (6) et **en ce que** l'extrémité de la ligne de dérivation en liaison avec la chambre de distribution d'un plateau Pi est reliée à un moyen de distribution disposé en-dessous de ladite grille supérieure dans un espace de collecte (30) d'un plateau aval (Pi +1).

7. Dispositif selon l'une des revendications 1 à 5 **caractérisé en ce qu'**un plateau est délimité par une grille inférieure (7) et une grille supérieure (6) et **en ce que** l'extrémité de la ligne de dérivation en liaison avec la chambre de distribution d'un plateau Pi est reliée à un moyen de distribution disposé en-dessous de ladite grille supérieure dans une chambre de mélange (31) contiguë à la chambre de distribution (32) du plateau Pi + 1.

8. Procédé d'injection d'un fluide dévié dans un procédé de séparation de constituants d'ue charge par lit mobile simulé comportant au moins les étapes suivantes :
• on fait circuler un fluide principal à travers plusieurs lits d'adsorbants contenus entre des plateaux,
• on injecte et on extrait des fluides secondaires (charge, désorbant, ..) selon une séquence appropriée pour réaliser la séparation des constituants de la charge,
• on injecte un fluide dévié d'un plateau vers le suivant,
**caractérisé en ce que** l'on fait circuler au moins une partie du fluide principal à l'extérieur de l'enceinte permettant de réaliser la séparation par l'intermédiaire d'une ligne de dérivation, une des extrémités de la ligne étant en liaison avec une chambre Ci de distribution du plateau Pi et l'autre extrémité étant en liaison avec une région d'un plateau distributeur suivant Pi + 1, distincte d'une chambre Ci + 1 dudit plateau Pi + 1.

9. Procédé selon la revendication 8 **caractérisé en ce que** l'on prélève à partir d'une chambre (Ci) une fraction du fluide principal et on injecte ladite fraction dans une chambre de mélange (31) contiguë à une chambre de distribution Ci + 1, (32) du plateau suivant.

10. Application du dispositif selon l'une des revendications 1 à 7 et du procédé selon l'une des revendications 8 à 9 à la séparation des normales paraffines de C10 à C13 à partir de charges de type kérosène adouci.

## Claims

1. A device for separating at least one compound from a mixture or a body by simulated moving bed adsorption, comprising:
• at least one vessel or column comprising one or more beds of adsorbant (Ai), two beds of adsorbant being separated by at least one plate (Pi) for distributing and extracting fluids, the plate comprising one or more pannels for distributing, mixing and/or extracting fluids;
• at least one conduit (4) for introducing a main fluid and a conduit (2) for extracting main fluid;
• a plurality of conduits (10, 11, 12, 13, Ti) for extracting or injecting secondary fluids;
• a bypass circuit placing a distributor plate in communication with at least one bypass line (Li,j);
• the pannel comprising a single chamber (Ci) for distribution, mixing and/or extraction,
**characterized in that**:
• the device comprises means (14, Voi,j, 20) for bringing at least one chamber (Ci) into communication with at least one bypass line (Li,j);
• one end of the bypass line is connected with said chamber Ci of a pannel of plate Pi, and the other end communicates with a region (Ri+1) of a pannel of a distributor plate Pi+1, said region being distinct from the distribution chamber Ci+1.

2. A device according to claim 1, **characterised in that** said communication means comprise at least one valve Voij disposed on at least one bypass line (Li,j), and **in that** the end of the bypass line that is not connected to the region of the plate is connected to an introduction and/or extraction line (Ti).

3. A device according to claim 1, **characterized in that** said communication means comprise at least one rotary valve (20), said rotary valve being connected to at least one introduction and/or extraction line (Ti) and at least one bypass line (Li,j), said valve comprising means at least for communicating an introduction and/or extraction line with at least one bypass line.

4. A device according to one of claims 1 to 3, **characterized in that** the fluid distribution circuit is disposed around said vessel, and **in that** it comprises a main line (61) that is divided into a plurality of secondary lines (62, 63, 62a, 62b) so that the fluid or fluids reach the pannels forming a plate at substantially the same time.

5. A device according to one of claims 1 to 4, **characterized in that** the pannels are parallel to each other, **in that** the fluid distribution device comprises a main line connected to secondary lines pertaining to each pannel of the plate, and **in that** the bypass line is connected to a region of a pannel.

6. A device according to one of claims 1 to 5, **characterized in that** a plate is delimited by a lower screen (7) and an upper screen (6) and **in that** the end of the bypass line connected with the distribution chamber of a plate Pi is connected to a distribution means disposed below said upper screen in a collection space (30) of a downstream plate (Pi+1).

7. A device according to one of claims 1 to 5, **characterized in that** a plate is delimited by a lower screen (7) and an upper screen (6) and **in that** the end of the bypass line connected with the distribution chamber of a plate Pi is connected to a distribution means disposed below said upper screen in a mixing chamber (31) contiguous with the distribution chamber (32) of plate Pi+1.

8. A process for injecting a diverted fluid into a process for separating constituents of a feed by a simulated moving bed process, comprising at least the following steps:
• moving a main fluid through a plurality of beds of adsorbant contained between plates;
• injecting and extracting secondary fluids (feed, desorbant, etc.) in a sequence that is appropriate to separate the constituents in the feed;
• injecting a fluid diverted from one plate to the subsequent plate;
**characterized in that** at least a portion of the main fluid is moved outside the separation vessel via a bypass line, one of the ends of the line being connected with a distribution chamber Ci of the plate Pi and the other end being connected with a region of the subsequent plate Pi+1 distinct from a chamber Ci+1 of said plate Pi+1

9. A process according to claim 8, **characterized in that** a fraction of the main fluid is removed from one chamber (Ci) and said fraction is injected into a mixing chamber (31) contiguous with a distribution chamber Ci+1 (32) of the subsequent plate Pi+1.

10. Application of a device according to one of claims 1 to 7 and of the process according to claim 8 or claim 9 for separating C10 to C13 normal paraffins from sweetened kerosene type feeds.

## Patentansprüche

1. Vorrichtung, die das Trennen von mindestens einem Bestandteil ausgehend von einem Gemisch oder einem Adsorptionskörper im simulierten Wanderflüssigbett erlaubt, Folgendes aufweisend:
• mindestens einen Einschluss oder eine Säule, der/die ein oder mehrere Adsorptionsbetten (Al) aufweist, wobei zwei Adsorptionsbetten von mindestens einer Verteiler- und Extraktionsplatte (Pi) von Fluiden getrennt sind, wobei die Platte eine oder mehrere Verteilungstafeln aufweist, die es erlauben, Fluide zu verteilen, mischen und/oder zu extrahieren,
• mindestens eine Leitung (4) zum Einführen eines Hauptfluids und eine Leitung (2) zum Extrahieren des Hauptfluids,
• mehrere Leitungen (10, 11, 12, 13, Ti), die es erlauben, Nebenfluide zu extrahieren oder zu injizieren,
• einen Abzweigkreislauf, der eine Verteilerplatte mit mindestens einer Abzweigleitung (Li,j) kommunizieren lässt,
• wobei die Platte eine einzige Verteiler- (Ci) und/oder Extraktionskammer und eine Mischkammer, die entweder identisch (Ci) oder getrennt ist und an die Kammer (Ci) angrenzt, aufweist
**dadurch gekennzeichnet, dass**:
• die Vorrichtung Mittel (14, Voi,j, 20) zum Herstellen der Kommunikation von mindestens einer Kammer (Ci) mit mindestens einer Abzweigleitung (Li,j) aufweist,
• eines der Enden der Abzweigleitung mit der Kammer Ci einer Tafel der Platte Pi verbunden ist, und das andere Ende mit einem Bereich (Ri+1) einer Tafel der Verteilerplatte Pi+1 verbunden ist, wobei der Bereich von der Verteilerkammer Ci+1 getrennt ist.

2. Vorrichtung nach Anspruch 1, **dadurch gekennzeichnet, dass** die Mittel zum Herstellen der Verbindung mindestens ein Ventil Voi,j aufweisen, das auf mindestens einer Abzweigleitung (Li,j) angeordnet ist, und dass das Ende der Abzweigleitung, das nicht mit dem Bereich der Platte verbunden ist, mit einer Leitung (Ti) zum Einführen und/oder Extrahieren verbunden ist.

3. Vorrichtung nach Anspruch 1, **dadurch gekennzeichnet, dass** die Mittel zum Herstellen der Verbindung mindestens ein Drehventil (20) aufweisen, wobei das Drehventil mit mindestens der Leitung (Ti) zum Einführen und/oder Extrahieren, und mindestens einer Abzweigleitung (Li,j) verbunden ist, wobei das Ventil Mittel aufweist, die es erlauben, mindestens eine Einführ- und/oder Extraktionsleitung mit mindestens einer Abzweigleitung kommunizieren zu lassen.

4. Vorrichtung nach einem der Ansprüche 1 bis 3, **dadurch gekennzeichnet, dass** der Verteilerkreislauf der Fluide um den Einschluss angeordnet ist, und dass er eine Hauptleitung (61) aufweist, die sich in mehrere Nebenleitungen (62, 63, 62a, 62b) teilt, so dass das Fluid oder die Fluide die Tafeln, die eine Platte bilden, im Wesentlichen im gleichen Augenblick erreicht/erreichen.

5. Vorrichtung nach einem der Ansprüche 1 bis 4, **dadurch gekennzeichnet, dass** die Platten einen Ausschnitt des parallelen Typs aufweisen, und dass die Fluidverteilervorrichtung eine Hauptleitung aufweist, die an Nebenleitungen relativ zu jeder der Tafeln der Platte angeschlossen ist, und dass die Abzweigleitung mit einem Bereich einer Tafel in Verbindung ist.

6. Vorrichtung nach einem der Ansprüche 1 bis 5, **dadurch gekennzeichnet, dass** eine Platte von einem unteren Gitter (7) und einem oberen Gitter (8) abgegrenzt ist, und dass das Ende der Abzweigleitung in Verbindung mit der Verteilerkammer einer Platte Pi mit einem Verteilermittel verbunden ist, das unterhalb des oberen Gitters in einem Sammelraum (30) einer stromabwärtigen Platte (Pi+1) angeordnet ist.

7. Vorrichtung nach einem der Ansprüche 1 bis 5, **dadurch gekennzeichnet, dass** eine Platte von einem unteren Gitter (7) und einem oberen Gitter (6) abgegrenzt ist, und dass das Ende der Abzweigleitung in Verbindung mit der Verteilerkammer einer Platte Pi mit einem Verteilermittel verbunden ist, das unterhalb des oberen Gitters in einer Mischkammer (31) neben der Verteilerkammer (32) der Platte Pi+1 angeordnet ist.

8. Verfahren zum Injizieren eines Fluids, das in einem Trennverfahren von Bestandteilen einer Charge durch simuliertes Wanderbett umgeleitet wird, das mindestens die folgenden Schritte aufweist:
• man lässt ein Hauptfluid durch mehrere Adsorptionsbetten, die zwischen den Platten enthalten sind, zirkulieren,
• man injiziert Nebenfluide (Charge, Desorptionsmittel usw.) oder extrahiert sie gemäß einer geeigneten Abfolge, um das Trennen der Bestandteile der Charge auszuführen,
• man injiziert ein Fluid, das von einer Platte zu der nächsten umgeleitet wird,
**dadurch gekennzeichnet, dass** man mindestens einen Teil des Hauptfluids außerhalb des Einschlusses zirkulieren lässt, was das Ausführen der Trennung über eine Abzweigleitung erlaubt, wobei eines der Enden der Leitung mit einer Verteilerkammer Ci der Platte Pi und das andere Ende mit einem Bereich einer nächsten Verteilerplatte Pi+1, die von einer Kammer Ci+1 von der Platte Pi+1 getrennt ist, verbunden ist.

9. Verfahren nach Anspruch 8, **dadurch gekennzeichnet, dass** man ausgehend von einer Kammer (Ci) einen Bruchteil des Hauplfluids entnimmt und den Bruchteil in eine Mischkammer (31) neben einer Verteilerkammer Ci+1 (32) der darauffolgenden Platte injiziert.

10. Anwenden der Vorrichtung nach einem der Ansprüche 1 bis 7 und des Verfahrens nach einem der Ansprüche 8 bis 9 an das Trennen von Normalparaffinen von C10 bis C13 ausgehend von Chargen des Typs entschwefeltes Kerosin.
